# EUROPEAN PATENT APPLICATION

(11) **EP 3 182 057 A1**
(43) Date of publication of application: **21.06.2017**
(21) Application number: 16204423.4
(22) Date of filing: 15.12.2016
(51) Int. Cl.: G01B 11/16

(54) **COMPONENTS WITH ARRAY-BASED STRAIN SENSORS AND METHODS FOR MONITORING THE SAME**

(30) Priority: 17.12.2015 US 201514972207
(71) Applicant: General Electric Company, Schenectady, NY 12345 (US)
(72) Inventor: BURNSIDE, Jason Lee, Greenville, SC South Carolina 29615 (US); GERMANN, Bryan Joseph, Greenville, SC South Carolina 29615 (US); HOVIS, Gregory Lee, Greenville, SC South Carolina 29615 (US); RANSON, William Farris, Greenville, SC South Carolina 29615 (US)
(74) Representative: Pöpper, Evamaria

(57) **Abstract**

Components can include a substrate and an array-based strain sensor disposed on the substrate, wherein the array-based strain sensor comprises a plurality of reference features distributed along both a first axis and a second axis to form at least a two-dimensional array.

## Description

### BACKGROUND OF THE INVENTION

The subject matter disclosed herein relates to strain sensors and, more specifically, to components with array-based strain sensors and methods for monitoring the same.

Some components may need to operate in environments comprising elevated temperatures and/or corrosive conditions. For example, turbomachines are widely utilized in fields such as power generation and aircraft engines. Such gas turbine systems include a compressor section, a combustor section, and at least one turbine section. The compressor section is configured to compress air as the air flows through the compressor section. The air is then flowed from the compressor section to the combustor section, where it is mixed with fuel and combusted, generating a hot gas flow. The hot gas flow is provided to the turbine section, which utilizes the hot gas flow by extracting energy from it to power the compressor, an electrical generator, and other various loads.

During operation of gas turbine engines, the temperatures of combustion gases may exceed 3,000°F, considerably higher than the melting temperatures of the metal parts of the engine which are in contact with these gases. Operation of these engines at gas temperatures that are above the metal part melting temperatures may depend in part one or more protective coatings and/or on supplying a cooling air to the outer surfaces of the metal parts through various methods. The metal parts of these engines that are particularly subject to high temperatures, and thus require particular attention with respect to cooling, are the metal parts forming combustors and parts located aft of the combustor.

Moreover, these and other components may experience stress and/or strain from various forces over its operational lifecycle. While various tools may be utilized to measure imparted stress and strain in relatively standard environments, turbine and other components in may experience various forces across a variety of locations as opposed to at a single point or along a linear path.

Accordingly, alternative components with array-based strain sensors and methods for monitoring the same would be welcome in the art.

### BRIEF DESCRIPTION OF THE INVENTION

In one embodiment, a component is disclosed. The component can include a substrate and an array-based strain sensor disposed on the substrate, wherein the array-based strain sensor comprises a plurality of reference features distributed along both a first axis and a second axis to form at least a two-dimensional array.

In another embodiment, a method for monitoring a component is disclosed. The method can include measuring a plurality of second distances between a plurality of reference features of an array based strain sensor on the component, wherein the plurality of reference features distributed along both a first axis and a second axis to form at least a two-dimensional array, and comparing the plurality of second distances to a plurality of first distances between the plurality of reference features of the strain sensor from a first time interval.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary component comprising an array-based strain sensor according to one or more embodiments shown or described herein;
FIG. 2 is an exemplary array-based strain sensor at three different time intervals according to one or more embodiments shown or described herein;
FIG. 3 is an exemplary array-based strain sensor overlaying a derived strain map according to one or more embodiments shown or described herein;
FIG. 4 is an exemplary array-based strain sensor comprising a plurality of serial regions according to one or more embodiments shown or described herein;
FIG. 5 is an exemplary method for monitoring a component with an array-based strain sensor according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

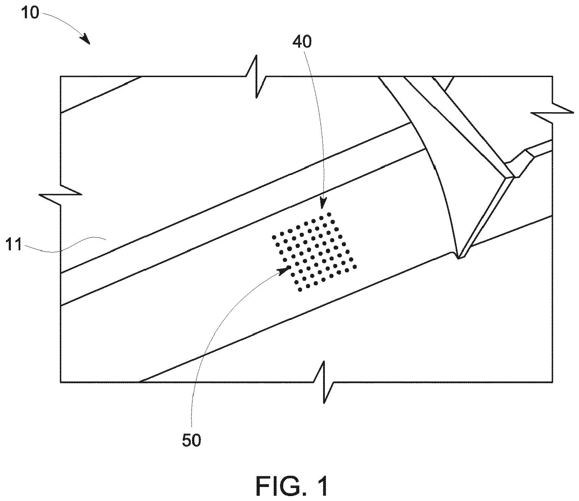

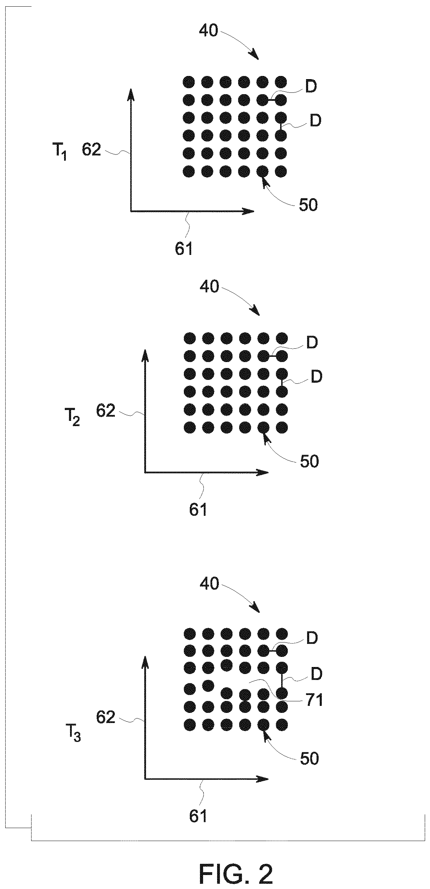

Referring now to FIGS. 1 and 2, a component 10 generally comprises a substrate 11 and an array-based strain sensor 40 disposed on the substrate 11. The array-based strain sensor 40 can comprise a plurality of reference features 50 distributed along both a first axis 61 and a second axis 62 to form at least a two-dimensional array. The array-based strain sensor 40 can help facilitate determinations of strain, strain rate, creep, fatigue, stress, etc. across that region of the component whereas a two point strain sensor (or one that extends along a single linear vector) may be more limiting.

The component 10 (and more specifically the substrate 11 of the overall component 10) can comprise a variety of types of components used in a variety of different applications, such as, for example, components utilized in high temperature applications (e.g., components comprising nickel or cobalt based superalloys). In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

Referring now to FIGS. 1-4, the array-based strain sensor 40 is deposited on a portion of the exterior surface of the substrate 11. The array-based strain sensor 40 generally comprises a plurality of reference features 50 distributed along both a first axis 61 and a second axis 62 to form at least a two-dimensional array. Based in part on the various forces and operating conditions of component, each of the reference features 50 may independently shift in location with respect to one another so that strain (and/or strain rate, creep, fatigue, stress, etc.) across the entire at least two-dimensional array may be mapped.

The plurality of reference features 50 and the first and second axes 61 and 62 may comprise a variety of different configurations. For example, the first axis 61 and the second axis 62 can diverge from one another at any non-zero degree angle such that the at least two-dimensional array of the plurality of reference features 50 is more than a linear vector (e.g., two reference features or a plurality of reference features disposed in a straight line). In some embodiments, the first axis 61 and the second axis 62 may meet at substantially a 90 degree angle. Such embodiments may result in at least a two-dimensional square shaped array-based strain sensor 40. In other embodiments, the first and second axis 61 and 62 may be defined in any non-similar direction such that the at least two-dimension array comprises any non one-dimensional shape. For example, the at least two-dimensional array may comprise a square, rectangle, circle or any other geometrical or non-geometrical two-dimensional shape.

It should be appreciated that in some embodiments, the component 10 may comprise a flat substrate 11 or a contoured substrate 11. In embodiments comprising the flat substrate 11, the plurality of reference features 50 may be disposed in a substantially 2-dimensional array with little to no change in the third dimension (e.g., height). In embodiments where the substrate 11 comprises one or more contours, the otherwise 2-dimensional array of the plurality of reference features 50 may take on a three-dimensional array comprising some change in the third dimension (e.g., height). As used herein, the "at least two-dimensional array" includes pluralities of reference features 50 disposed in either two or three dimensions such as dictated by the contours of the substrate 11.

Moreover, the plurality of reference features 50 may comprise any distribution pattern and distances D within the at least two-dimensional array. For example, in some embodiments, such as that illustrated in the first point in time T₁ in FIG. 2, the plurality of reference features 50 may be substantially uniformly distributed within the at least two-dimensional array. The plurality of reference features 50 may be substantially uniformly distributed along only one axis (with the distribution along the other axis being non-uniform), or the plurality of reference features 50 may be substantially uniformly distributed along both the first axis 61 and the second axis 62 to form a grid-like pattern as illustrated. In some embodiments, the plurality of reference features may be non-uniformly distributed throughout the entire at least two-dimensional array so long as the initial locations of the plurality of reference features 50 are known with respect to one another such that any relative movement within the at least two-dimensional array may be identified and measured.

Each of the plurality of reference features 50 in the array-based strain sensor 40 can comprise any suitable shape or shapes suitable for tracking their respective location within the at least two-dimensional array. The shapes may therefor help enable location tracking via one or more edges, corners, centroid analysis, or any other suitable mechanism. For example, in some embodiments, the plurality of reference features may comprise dots, lines, circles, boxes or any other geometrical or non-geometrical shape so long as they are consistently identifiable and may be used to measure the distance D there between. Moreover, each of the plurality of reference features may comprise the same shape, or the plurality of reference features may comprise a plurality of shapes. For example, in some embodiments, some of the reference features 50 may comprise substantially solid shapes (e.g., a filled in circle, square or other shape), while other reference features 50 may comprise outlines of shapes (e.g., the outline or a circle, square or other shape). Such embodiments may help encode additional information within the plurality of reference features 50 such as by using binary language between the solid and outlined/hollow reference features 50.

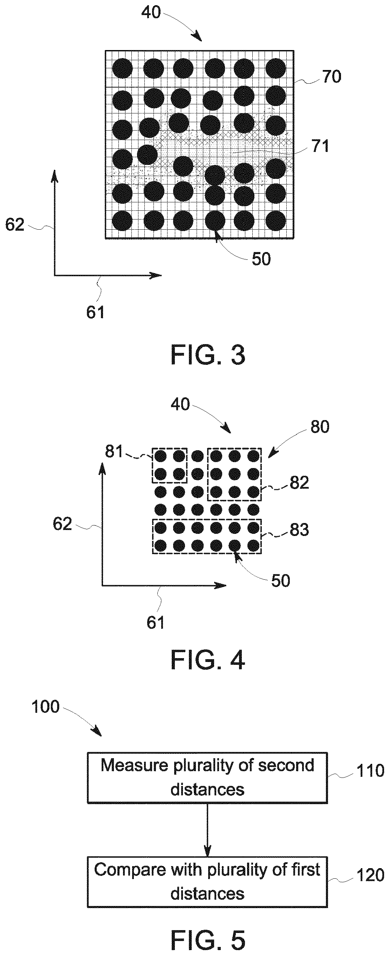

As best illustrated in FIG. 4, in some embodiments the array-based strain sensor 40 can comprise one or more serial regions 80 within the at least two-dimensional array such as a first serial region 81, second serial region 82 and third serial region 83 as illustrated. Each of the one or more serial regions 80 can comprise any portion of the plurality of reference features that are embedded with additional information. The embedded information may comprise any information including information for identifying the individual array-based strain sensor 40 and/or the overall component 10, and/or orienting the array-based strain sensor 40. For example, in some embodiments, a serial region 80 may comprise information to form a unique identifier (hereinafter "UID"). The UID may comprise any type of barcode, label, tag, serial number, pattern or other identifying system that facilitates the identification of that particular array-based strain sensor 40 and/or overall component 10. Overall, the information embedded in the one or more serial regions 80 may thereby assist in the identification and tracking of particular array-based strain sensors 40, components 10 or even overall systems or machines to help correlate measurements for past, present and future operational tracking.

The plurality of reference features 50 of the array-based strain sensor 40 can comprise any material or materials suitable for surviving the operation of the component for location measurements at a plurality of time intervals. For example, in some embodiments the plurality of reference features 50 of the array-based strain sensor 40 may comprise a ceramic material such as any ceramic material or material suitable for deposition (such as utilizing a ceramic powder through an automated additive manufacturing process). The ceramic material may provide increased temperature survivability in relatively hot or harsh environments. For example, in some embodiments, the plurality of reference features 50 may comprise a thermal barrier coating material such as yttria-stabilized zirconia (also referred to as YSZ). In such embodiments, the YSZ may comprise, for example, YSZ-D111. In even some embodiments, the plurality of reference features 50 may comprise a metallic bond coat and/or thermally grown oxide to assist in the deposition of the ceramic top coat (e.g., YSZ). In some embodiments, the plurality of reference features 50 may be formed by one or more metal additive processes (e.g., cladding, welding, or deposition), manufacturing processes (e.g., casting, machining, etching or engraving), or inherent component features (e.g., cooling holes). While some particular components 10 (or at least particular locations thereon) may not experience the elevated temperatures to require thermal barrier coatings, such utilization for the array-based strain sensor 40 may ensure its longevity where other strain sensor materials (e.g., polymeric materials, chemical dyes, etc.) could potentially break down and disappear from the relatively harsh environment.

In some embodiments, the component 10 may further comprise one or more coatings to help to protect the substrate 11 from the operating environment of the component 10 (e.g., elevated temperatures in an industrial gas turbine), help ensure adhesion of the plurality of reference features 50 and/or help maintain the edges of the plurality of reference features 50 from erosion or corrosion.

For example, in some embodiments, the component 10 may comprise a coating disposed between the substrate 11 and at least one of the plurality of reference features 50. Such embodiments may help protect the substrate 11 and/or ensure adhesion of the plurality of reference features 50. In some embodiments, the component 10 may comprise a coating disposed adjacent at least one of the plurality of reference features 50, such as surrounding the edges of the plurality of reference features. Such embodiments may help prevent edge degradation of the plurality of reference features 50.

Suitable coatings can comprise a variety of materials based in part, for example, on the environment of the component 10. In some embodiments, the coating can comprise a ceramic material that may provide increased temperature survivability. For example, in some embodiments, the ceramic material may comprise a thermal barrier coating such as yttria-stabilized zirconia. In even some embodiments, the coating may comprise a metallic bond coat and/or thermally grown oxide to assist in the deposition of a subsequent ceramic top coat (e.g., YSZ). In some embodiments, the coating may comprise a gel coating such as gel aluminide.

The dimensions of the array-based strain sensor 40 (e.g., overall size and the size of the individual reference features 50) may depend on, for example, the component 10, the location of the array-based strain sensor 40, the targeted precision of the measurement, deposition technique, and/or measurement technique. For example, in some embodiments, the array-based strain sensor 40 may comprise a length and width ranging from less than 1 millimeter to greater than 300 millimeters. Moreover, the array-based strain sensor 40 may comprise any thickness that is suitable for deposition and subsequent identification without significantly impacting the performance of the underlying component 10. For example, in some embodiments, the array-based strain sensor 40 may comprise a thickness of less than from about .1 millimeters to greater than 1 millimeter. In some embodiments, the array-based strain sensor 40 may have a substantially uniform thickness.

The array-based strain sensor 40 may be deposited in one or more of a variety of locations on the substrate 11 of the overall component 10. For example, if the substrate comprises a turbine component, the array-based strain sensor 40 may be deposited on a turbine blade, compressor blade, vane, nozzle, shroud, rotor, transition piece or casing. In such embodiments, the array-based strain sensor 40 may be deposited in one or more locations known to experience various forces during unit operation such as on or proximate airfoils, platforms, tips or any other suitable location. Moreover, since the array-based strain sensor 40 may be at least partially protected by a coating or comprise a highly-resistant material, the array-based strain sensor 40 may be deposited in one or more locations known to experience elevated temperatures (wherein strain sensors comprising other materials may corrode and/or erode). For example the array-based strain sensor 40 may be deposited on a hot gas path or combustion turbine component.

In even some embodiments, multiple array-based strain sensors 40 may be deposited on a single turbine component or on multiple turbine components. For example, a plurality of array-based strain sensors 40 may be deposited on a single turbine component (e.g., a turbine blade) at various locations such that the strain may be determined at a greater number of locations about the individual turbine component. Alternatively or additionally, a plurality of like turbine components (e.g., a plurality of turbine blades), may each have an array-based strain sensor 40 deposited in a standard location so that the amount of strain experienced by each specific turbine component may be compared to other like turbine components. In even some embodiments, multiple different turbine components of the same turbine unit (e.g., turbine blades and vanes for the same turbine) may each have an array-based strain sensor 40 deposited thereon so that the amount of strain experienced at different locations within the overall turbine may be determined and potentially compared.

Moreover, the plurality of reference features 50 of the array-based strain sensor 40 may distributed over any sized region of the overall substrate 11. For example, in some embodiments, the plurality of reference features 50 may be distributed over a relatively isolated region of the substrate 11 such as a region that comprises 1 percent or less of the entire substrate. However, in some embodiments, the plurality of reference features 50 may be distributed over a much larger region to facilitate monitoring of strain, strain rate, creep, fatigue, stress, etc. across a much larger percentage of the substrate 11. For example, in some embodiments, the plurality of reference features 50 of the array-based strain sensor 40 may be distributed over 50 percent or more of the substrate 11. In some embodiments, the plurality of reference features 50 of the array-based strain sensor 40 may be distributed over a certain area of interest of the component. For example, if the substrate 11 comprises a turbine component comprising an airfoil portion, the plurality of reference features 50 of the array-based strain sensor 40 may be distributed over 50 percent or more of the airfoil portion. In even some embodiments, the plurality of reference features 50 of the array-based strain sensor 40 may be distributed over the entire substrate 11. While specific embodiments have been presented herein, it should be appreciated that the size, shape, location and distribution coverage of the plurality of reference features 50 of the array-based strain sensor 40 may comprise a variety of variants such as depending on the specific substrate 11 of the component 10.

As best illustrated in FIGS. 2 and 3, in operation, the array-based strain sensor 40 may be utilized to monitor strain, strain rate, creep, fatigue, stress, etc. across a larger region of a substrate 11 than would be possible if a two-point strain sensor was utilized. For instance, FIG. 2 illustrates the array-based strain sensor 40 comprising a plurality of reference features 50 at a first point in time T₁, a second point in time T₂ and a third point in time T₃. The first point in time T₁ can comprise an initial state when the array-based strain sensor 40 is first applied. At such a state, all of the plurality of reference features 50 may, for example, be uniformly distributed along both the first axis 61 and the second axis 62 to form the at least two-dimensional array. Then, after the component 10 is utilized in operation for a first interval, the plurality of reference features 50 may start to diverge and/or converge towards one another as illustrated at the second point in time T₂. Subsequently, after the component 10 is utilized in operation for a second interval, the plurality of reference features 50 may further diverge and/or converge towards one another as illustrated at the third point in time T₃. As illustrated in FIG. 3, these movements of the plurality of reference features 50 relative to one another may be utilized to produce a strain map 70 that illustrates changes in distances to highlight potential areas experiencing strain concentration. An operator may use this information to help determine, for example, the future suitability of the component 10 and/or any modification (e.g., repair) operations that may be beneficial.

Referring additionally to FIG. 5 a method 100 is illustrated for monitoring a component 10. The method 100 can comprise in step 110 measuring a plurality of second distances between a plurality of reference features 50 of an array-based strain sensor 40 on the component 10 at a second time interval. The method 100 can further comprise in step 120 comparing the plurality of second distances between the plurality of reference features 50 of the strain sensor 40 (that was measured in step 110) to a plurality of first distances between the plurality of reference features 50 of the strain sensor 40 from a first time interval to determine a strain between the first time interval and the second time interval. The first time interval may comprise an earlier point in time such as before the component was utilized in operation (e.g., installed on a turbine). Furthermore, the plurality of first distances may have been measured or otherwise known based on, for example, manufacturing parameters.

It should now be appreciated that array-based strain sensors may be disposed on substrates to form overall components that can be monitored for strain, creep or the like over larger areas of the component. The at least two-dimension array of the plurality of reference features may enable a better understanding of the amount, severity and location of potential strain across a larger area of coverage. This information may then be utilized to determine any necessary modifications to the component or verify its suitability for future use.

The invention is not to be seen as limited by the foregoing description, but is only limited by the scope of the appended claims.

## Claims

1. A component (10) comprising:
a substrate (11); and,
an array-based strain sensor (40) disposed on the substrate (11), wherein the array-based strain sensor (40) comprises a plurality of reference features (50) distributed along both a first axis (61) and a second axis (62) to form at least a two-dimensional array.

2. The component (10) of claim 1, wherein the plurality of reference features (50) comprise a plurality of dots or wherein the plurality of reference features (50) are substantially uniformly distributed within the at least two-dimensional array.

3. The component (10) of claim 1 or claim 2, wherein a first portion of the plurality of reference features (50) comprise substantially solid shapes, and wherein a second portion of the plurality of reference features (50) comprise outlines of shapes.

4. The component (10) of one of the foregoing claims, wherein the plurality of reference features (50) comprise yttria-stabilized zirconia.

5. The component (10) of one of the foregoing claims, wherein the plurality of reference features (50) comprise one or more serial regions (80) within the at least two-dimensional array, where at least one of the one or more serial regions (80) comprises information for identifying the component (10).

6. The component (10) of claim 5, where at least one of the one or more serial regions (80) comprises information for identifying the array-based strains sensor or orienting the array-based strain sensor (40).

7. The component (10) of one of the foregoing claims, wherein the first axis (61) and the second axis (62) meet at substantially a 90 degree angle.

8. The component (10) of one of the foregoing claims, wherein the plurality of reference features (50) of the array-based strain sensor (40) are distributed over 50 percent or more of the substrate (11) or over the entire substrate (11).

9. The component (10) of one of the foregoing claims, further comprising a coating disposed between the substrate (11) and at least one of the plurality of reference features (50) or adjacent at least one of the plurality of reference features (50).

10. The component (10) of claim 9, wherein the coating surrounds the edges of the plurality of reference features (50).

11. The component (10) of one of the foregoing claims, wherein the substrate (11) comprises a turbine component.

12. The component (10) of one of the foregoing claims, wherein the turbine component comprises an airfoil portion, and wherein the plurality of reference features (50) of the array-based strain sensor (40) are distributed over 50 percent or more of the airfoil portion.

13. A method for monitoring component (10), the method comprising:
measuring a plurality of second distances between a plurality of reference features (50) of an array based strain sensor on the component (10), wherein the plurality of reference features (50) distributed along both a first axis (61) and a second axis (62) to form at least a two-dimensional array; and,
comparing the plurality of second distances to a plurality of first distances between the plurality of reference features (50) of the strain sensor from a first time interval.

14. The method of claim 13, wherein the plurality of reference features (50) of the array-based strain sensor (40) are distributed over 50 percent or more of the component (10).

15. The method of claim 13 or claim 14, wherein comparing the plurality of second distances to the plurality of first distances comprises producing a strain map (70) illustrating changes in distances.
